# EUROPEAN PATENT SPECIFICATION

(11) **EP 3 141 089 B1**
(45) Date of publication and mention of the grant of the patent: **01.05.2024**
(21) Application number: 15724887.3
(22) Date of filing: 11.05.2015
(51) Int. Cl.: H05H 1/28, B23K 10/02, H05H 1/34

(54) **CONSUMABLE CARTRIDGE FOR A PLASMA ARC CUTTING SYSTEM**
EINWEGKARTUSCHE FÜR EINE PLASMASCHNEIDGERÄT
CARTOUCHE CONSOMMABLE POUR UN SYSTÈME DE COUPE ARC PLASMA

(30) Priority: 09.05.2014 US 201461991114 P; 12.08.2014 US 201462036393 P; 19.09.2014 WO PCT/US2014/056546
(43) Date of publication of application: 15.03.2017
(73) Proprietor: Hypertherm, Inc., Hanover, NH 03755 (US)
(72) Inventor: SANDERS, Nicholas, A., Enfield, NH 03748 (US); SHIPULSKI, Michael, E., Hanover, NH 03755 (US)
(74) Representative: Barker Brettell LLP
(86) International application number: PCT/US2015/030138
(87) International publication number: WO 2015/172142

(56) References cited:
- EP-A2- 0 242 023
- WO-A1-93/13905
- WO-A1-2008/101226
- US-A- 4 034 250
- US-A1- 2014 021 172
- US-B1- 8 698 036

## Description

### FIELD OF THE INVENTION

The invention relates generally to the field of plasma arc cutting. More specifically, the invention relates to an apparatus for simplifying, optimizing and decreasing the time and cost of cutting through the use of improved consumable cartridges.

### BACKGROUND

Plasma arc torches are widely used in the cutting and marking of materials. A plasma torch generally includes an arc emitter (e.g., an electrode), an arc constrictor or constricting member (e.g., a nozzle) having a central exit orifice mounted within a torch body, electrical connections, passages for cooling, and passages for arc control fluids (e.g., plasma gas). The torch produces a constricted ionized jet of a gas with high temperature and high momentum. Gases used in the torch can be non-reactive (e.g., argon or nitrogen) or reactive (e.g., oxygen or air). During operation, a pilot arc is first generated between the arc emitter (cathode) and the arc constrictor (anode). Generation of the pilot arc can be by means of a high frequency, high voltage signal coupled to a DC power supply and the torch or by means of any of a variety of contact starting methods.

Traditional consumables suffer from a host of drawbacks both before and during a cutting operation. Before a cutting operation, selecting and installing the correct consumables for a particular cutting task can be burdensome and time-consuming. Operators must choose from a large inventory of different components, which must be selected and paired appropriately for efficient performance. During operation, current consumables encounter performance issues such as failing to effectively dissipate and conduct heat away from the torch tip and components, and failing to maintain proper consumable alignment and spacing. Furthermore, current consumables include substantial amounts of expensive materials, such as Copper and/or Vespel^{™}, which leads to significant manufacturing costs and inhibits their widespread commercialization, production and adoption. What is needed is a new and improved consumable platform that decreases manufacturing costs, part counts and/or inventory requirements, increases system performance (e.g., increases heat conduction and improves alignment of parts internally), and eases installation and use of consumables by end users.

WO 2008/101226 discloses a frame for a plasma arc torch with a torch body, an electrode, a nozzle, a shield, a swirl ring and a shield.

### SUMMARY OF THE INVENTION

The frame according to the invention is defined in claim 1. Further embodiments are the subject of the dependent claims.

### BRIEF DESCRIPTION OF THE DRAWINGS

The foregoing discussion will be understood more readily from the following detailed description of the invention when taken in conjunction with the accompanying drawings.
Figure 1A is an isometric illustration of a unitary cartridge for a plasma arc cutting system, according to an illustrative embodiment of the invention.
Figure 1B is a cross-sectional illustration of a unitary cartridge for a plasma arc cutting system, according to an illustrative embodiment of the invention.
Figure 1C is a cross-sectional illustration of a unitary cartridge for a plasma arc cutting system, according to an illustrative embodiment of the invention.
Figure 2A is an isometric illustration of an inner cartridge assembly for a plasma arc torch, according to an illustrative embodiment of the invention.
Figure 2B is a cross-sectional illustration of the inner cartridge assembly of Figure 2A, according to an illustrative embodiment of the invention.
Figure 3A is a cross-sectional illustration of an inner cartridge assembly for a plasma arc torch having plastic insulating components, according to an illustrative embodiment of the invention.
Figure 3B is a cross-sectional illustration of a cartridge type consumable assembly including a spring electrode disposed within a nozzle body and a sealing device disposed within a lock ring, according to an illustrative embodiment of the invention.
Figure 4A is a cross-sectional view of a cartridge for a plasma arc cutting system having a spring, a molded retaining cap press fit to the nozzle base, and a quick turn thread feature, according to an illustrative embodiment of the invention.
Figure 4B is a cross-sectional view of the cartridge of 4A installed in a torch head, according to an illustrative embodiment of the invention.
Figure 4C is an exterior view of the cartridge installed in a torch head shown in Figure 4B, the cartridge exterior rendered partially transparent to show a quick-turn thread feature, according to an illustrative embodiment of the invention.
Figure 5 is a cross-sectional view of a cartridge installed in a torch head, according to an illustrative embodiment of the invention.
Figures 6A and 6B are top-perspective and cross-sectional views, respectively, of a retaining cap for a plasma arc torch, according to an illustrative embodiment of the invention.
Figures 7A and 7B are top-perspective and bottom-perspective views, respectively, of a torch body, according to an illustrative embodiment of the invention.
Figures 8A and 8B are perspective and cross-sectional views, respectively, of a nozzle base, according to an illustrative embodiment of the invention.
Figures 9A and 9B are perspective and cross-sectional views, respectively, of a locking ring, according to an illustrative embodiment of the invention.
Figures 10A and 10B are perspective and cross-sectional views, respectively, of a shield isolator (or shield insulator), according to an illustrative embodiment of the invention.
Figures 11A and 11B are perspective and side-exterior views, respectively, of an electrode sleeve, according to an illustrative embodiment of the invention.
Figures 12A and 12B are cross-sectional views of shortened and elongated electrode sleeve assemblies, respectively, according to an illustrative embodiment of the invention.

### DETAILED DESCRIPTION OF THE DRAWINGS

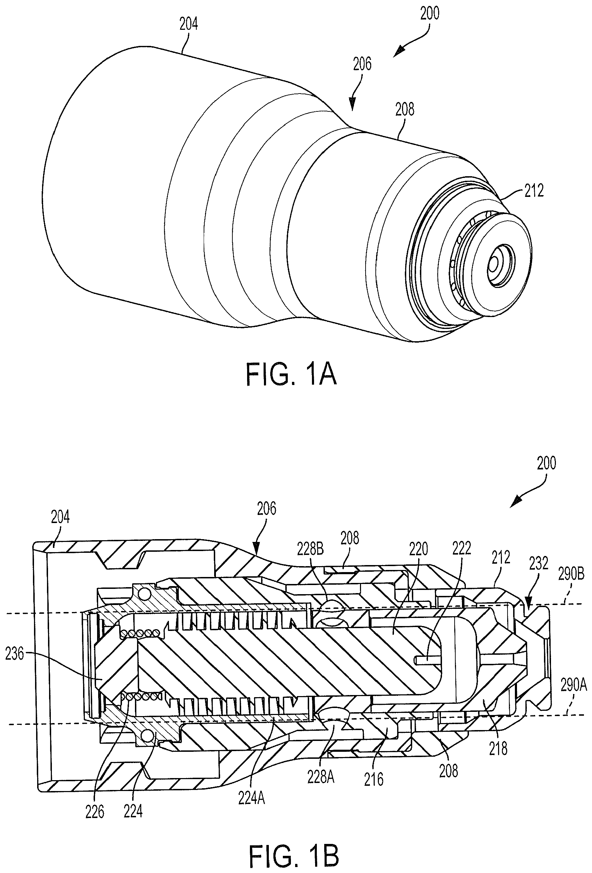

Figure 1A is an isometric illustration of a unitary cartridge 200 for a plasma arc cutting system, according to an illustrative embodiment of the invention. Visible from the exterior are a plastic exterior section 204, a metallic exterior section 208, and a copper exterior section 212 (e.g., a nozzle shield). The plastic exterior section 204 and the metallic exterior section 208 are joined at a junction 206. In some embodiments, the junction 206 is included in or near a tapered region. In some embodiments, the plastic exterior section 204 is a retaining cap. In some embodiments, the metallic exterior section 208 is a shield insulator. In some embodiments, the metallic exterior section 208 is formed substantially of a material other than copper (e.g., aluminum, anodized aluminum, etc.). In some embodiments, the copper exterior section 212 is formed of a pure or substantially pure copper or copper alloy. The component parts of the cartridge 200 are shown and described in more detail in the cross-sectional view shown in Figure 1B below.

Figure 1B is a cross-sectional illustration of a unitary cartridge 200 for a plasma arc cutting system, according to an illustrative embodiment of the invention. This view shows a nozzle body 216, a nozzle orifice 218, an electrode 220 having an emitting element 222, an insulator sleeve 224 having an elongated portion 224A, a resilient element 226, and an electrode contact button 236 (e.g., made of brass). One or more of these elements can be redesigned to achieve one or more of the above-stated objectives.

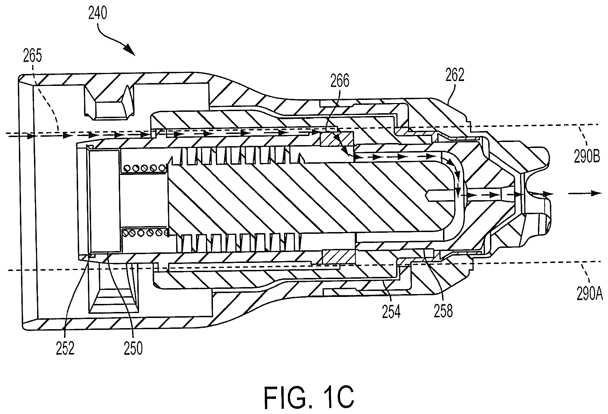

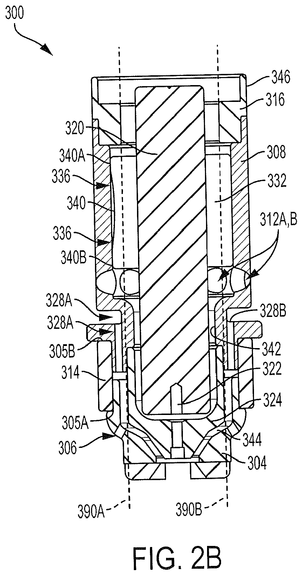

For example, the nozzle body 216 can be formed from a conductive material (e.g., a highly conductive material such as aluminum) and can be attached to (e.g., can be in direct physical contact with) other parts of the cartridge 200. In some embodiments, the nozzle body 216 is in thermal communication with certain parts of the cartridge 200 (e.g., via thermal conduction) but electrically isolated from certain parts (e.g., either the same parts or other parts with which the nozzle body 216 is in thermal communication). For example, the nozzle body 216 can function as a heat sink for the nozzle orifice 218 while remaining electrically isolated from the nozzle shield 212. Such a configuration can enhance cooling performance (for example, of the nozzle and the electrode) and reduce manufacturing costs by comparison to previously used materials (e.g., Vespel^{™}). In some embodiments, the cartridge has a region with a thermal conductivity of between about 200-400 Watts per meter per degree Kelvin (for example, aluminum may have a thermal conductivity of between 200-250 W/m-°K, while copper may have a thermal conductivity of between 350-400 W/m-°K). In some embodiments, aluminum can be relaced with a steel alloy, e.g. SS304. In some embodiments, the consumable cartridge has a heat capacity to current ratio of 2-4 W/m-°K-A. In some embodiments, the cartridge has an inner portion (e.g., designated by dotted lines 290A, 290B in Figure 1B, or 299A, 299B in Figure 1C, or 390A, 390B as shown below in Figure 2B) relative to a longitudinal axis of the cartridge comprising copper (e.g., including at least a portion of the shield, the nozzle, and the electrode). In some embodiments, the cartridge has an outer portion relative to the longitudinal axis (e.g., surrounding the copper inner portion and including at least a portion of the shield and a portion of the nozzle). The outer portion can be at least substantially free of copper. In some embodiments, the outer portion includes less than about 80% by volume copper. In some embodiments, the inner portion includes more than about 80% by volume copper. In some embodiments, the outer portion includes less than 90% by volume copper. In some embodiments, the inner portion includes more than about 90% by volume copper.

In addition, the nozzle body 216 includes a set of inlet swirl holes 228 (e.g., swirl holes 228A and 228B). In some embodiments, the set of inlet swirl holes 228 includes five swirl holes, or optionally between three and ten swirl holes. The swirl holes 228 can be radially offset to impart a swirl flow (e.g., radial and tangential velocity components) to gases flowing therethrough (e.g., a shield gas, plasma gas, and/or a plenum gas). In this configuration, the nozzle body 216 provides the swirl function previously provided by a swirl ring, thus eliminating the need for a traditional swirl ring. In addition, in some embodiments the nozzle body 216 is formed via a molding process, thus eliminating the need for expensive and time-consuming drilling procedures to create the swirl holes. In some embodiments, the nozzle shield 212 includes an angle 232 that helps redirect fluid flow away from the plasma arc during operation and helps to provide impingement cooling (e.g., gas flowing from holes 212 into angle 232).

Figure 1C is a cross-sectional illustration of a unitary cartridge 240 for a plasma arc cutting system, according to an illustrative embodiment of the invention. The unitary cartridge 240 can be similar in many respects to the cartridge 200 shown in Figure 1B but can differ in certain other respects. For example, the cartridge 240 utilizes a stamped torch interface 250 (e.g., a stamped pieces of copper) having a cross-sectional "T"-shape. The interface 250 can allow the electrode to slide more freely than in the Figure 1B configuration, which uses an electrode with a nipple feature that forms a mating surface with the spring. In Figure 1C, the cap and the nozzle body have been opened to ease manufacture and allow the electrode to slide freely into the nozzle body during cartridge assembly. The spring can then rest on the electrode, and the stamped torch interface 250 can use a small tab feature 252 to snap readily into the nozzle body, securing the electrode therein. Such a configuration avoids the need to press fit multiple pieces together (and, in turn, avoids the need to have to achieve tight tolerances between pieces) and/or the need to assemble different pieces of the torch from different directions. Using the cartridge 240, a manufacturer can simply slide the electrode into place in one step.

In addition, the cartridge 240 uses a molded, slotted swirl feature 266 to achieve the swirling function instead of using holes drilled in the nozzle body. For example, during operation gas can flow along path 265 as shown, with gas flowing out of the slots 266 and into the plasma chamber to form the swirl gas about the plasma arc. During operation, gas may also flow through molded gas shield channel 254, further cooling the nozzle body. Slots 266 form a set of swirl holes once the nozzle body, nozzle orifice, and/or nozzle liner are connected. Gas delivered to the slots is conveyed from the torch through a chamber defined by an internal surface of the nozzle body and an external surface of the nozzle liner (which, in combination, form the swirl holes). Such a configuration eliminates post-process machining steps and the associated expenses. In addition, the cartridge 240 includes a radial swage connection 258 between the nozzle orifice and the nozzle body. The radial swage connection 258 provides a robust connection interface to allow contact to be maintained between the nozzle orifice and the nozzle body, but also exposes significant surface area for heat to be conducted from the nozzle orifice to the nozzle body. Finally, in this embodiment, the electrode sleeve is removed and replaced with a more traditional heat exchanger.

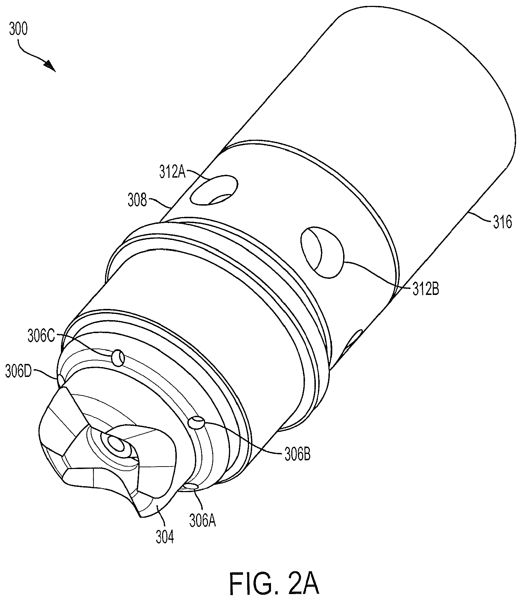

Figure 2A is an isometric illustration of an inner cartridge assembly 300 for a plasma arc torch, according to an illustrative embodiment of the invention. Visible from the exterior are a shield 304 having vent holes 306 (e.g., holes 306A-D as shown), a nozzle body 308 having flow holes or inlet swirl holes 312 (e.g., holes 312A, 312B as shown in figure 2A), a front insulator (or shield insulator) 314, and a rear insulator (or lock ring) 316. These and additional elements are described more fully in conjunction with the cross-sectional view shown in Figure 2B below.

Figure 2B is a cross-sectional illustration of the inner cartridge assembly 300 of Figure 2A, according to an illustrative embodiment of the invention. In this view, several additional components of the inner cartridge assembly 300 are visible, including an electrode 320 having an emitting element 322, an arc constrictor or nozzle orifice 324, shield flow holes 328 (e.g., flow holes 328A-B as shown) directed toward the nozzle orifice 324, an insulator sleeve 332, and a cooling gas flow channel 336. In this embodiment, the nozzle body 308 functions as the cartridge frame to which other parts attach.

A number of features of the inner cartridge assembly 300 can enhance its cooling capabilities. First, the nozzle body 308 can be made of aluminum, which can enhance heat conduction over previous materials (e.g., Vespel^{™}) and configurations as described above. Second, the nozzle orifice 324 can be made of copper and can be pressed onto the nozzle body 308. In such embodiments, the nozzle body 308 can serve as a heat sink for the copper nozzle orifice 324. Third, improved gas flow surfaces, can assist in cooling, e.g., with shield gas flowing forward through holes 328A, 328B just outside of the press area. A press fit arrangement can also provide improved thermal conduction paths between torch parts as a result of relatively tight tolerances between the surfaces of the parts. In some embodiments, the press fit arrangement includes an interference fit and/or a tabbed or interlocking fit having one or more step-like features. In addition, the small size of the press fit design has the additional advantages of reducing manufacturing and/or material costs and simplifying manufacture and assembly of the components (e.g., by having fewer parts).

The nozzle shield 304 can also be made of copper and can be pressed onto an anodized aluminum insulator 314 at a surface 305A. This assembly can then be pressed onto the nozzle body 308 at a press fit surface 305B. In such embodiments, the shield insulator 314 connects the nozzle body 308 to the shield 304. In some embodiments, the shield insulator 314 is press fit to the nozzle body 308. In some embodiments, the shield insulator 314 is an electrically insulative ring and/or includes a set of press-fit surfaces 305A, 305B that connect the shield 304 and the nozzle body 308. The shield insulator 314 can connect the nozzle body 308 to the shield 304 such that the nozzle body 308 and the shield 304 are electrically insulated from one another while still transferring thermal energy to one another. In some embodiments, the press fit surfaces may be knurled to further enhance thermal conduction between components (e.g., between nozzle body 308 and nozzle orifice 324, between nozzle body 308 and shield 304, etc.). In some embodiments, using a two-piece shield insulator can increase (e.g., double) electrical insulation abilities as a result of increasing contact surfaces.

The nozzle shield 304 can be considerably smaller than previous shields, allowing for efficient manufacture and assembly of components, improved durability, and greater assurances of proper orientation of cartridge parts relative to one another. By way of example, for a 45-amp system, a prior art stock shield might have a diameter of about 2.54 cm (one inch) and a mass of about 0.018 kg (0.04 pounds), whereas a cartridge shield in accordance with the current invention can have a diameter of about 1.27 cm (0.5 inches) with a mass of less than 0.005 kg , e.g. 0.003 kg (0.01 pounds, e.g. 0.007 pounds). For a 105-amp system, a prior art stock shield might have a diameter of about 2.54 cm (one inch) with a mass of about 0.023 kg (0.05 pounds), whereas a cartridge shield in accordance with the current invention can have a diameter of about a 1.27 cm (half inch) with a mass of about 0.005 kg, e.g. 0.006 kg (0.01 pounds, e.g. 0.013 pounds).

The smaller size configuration can carry significant advantages. First, components having a reduced mass have a reduced heat capacity, which allows the components to be rapidly cooled during post-flow and/or allows more heat to be transferred to the cooling gas during operation. Second, a smaller shield can attain comparatively higher temperatures during operation and can transfer more heat to the cooling gas. In some embodiments, the nozzle shield 304 is exposed to a cold gas entering the shield area, e.g., via shield flow holes 328, which can further reduce the temperature. The flow holes 328 can each have a total cross sectional area of at least about 2.54 cm² (one square inch).

In some embodiments, the electrode 320 includes a base made of copper. In some embodiments, the electrode 320 base has a small diameter with a pressed-on insulator sleeve 332 made of anodized aluminum and/or plastic used for electrical isolation. In some embodiments, a cooling gas flow channel or gap 336 exists between the insulator sleeve 332 and the nozzle body 308. In some embodiments, a cool gas flows in the gap 336. In some embodiments, a "dumbbell" configuration 340 defined by two end contacts 340A, 340B is used, which can reduce or minimize contact area between the nozzle body 308 and the insulator sleeve 332 and can reduce friction between parts.

In some embodiments, the sleeve 332 contacts the electrode 320, which can be part of a separate current path from the nozzle body 308 and/or a different portion of the current path from the nozzle body 308. In some embodiments, the electrode 320 and the nozzle orifice 324 can be electrically separated by a gap to create the arc and/or to ensure proper orientation of the parts in the torch. In such embodiments, the nozzle body 308 and the electrode 320 can be in physical contact between the sleeve 332 and the nozzle body 308. In such embodiments, insulative layers are needed in this region so that current is directed to pass through the emitting element 322.

In some embodiments, a wall of the nozzle body 342 near which the electrode 320 moves can stay comparatively cool during operation as gas flow passes both on the inside of the nozzle body 308 and directly across an exterior surface 344 of the nozzle orifice 324. The material choice (e.g., aluminum or another metal) for the nozzle body 342 design provides for a better conduction path and heat sink ability as compared with previous materials such as Vespel^{™}. Such factors assist in cooling the electrode isolation piece and allow the electrode to function even after a deep pit is formed in the emitting element from electrode use.

In some embodiments, a lock ring 316 (or isolation ring) forms an interface 346 between the cartridge 300 and the torch. In some embodiments, the lock ring 316 can be made of anodized aluminum. The lock ring 316 can be pressed into the nozzle body to "trap" the moveable electrode 320. The lock ring 316 can contain the components within the cartridge 300 and electrically isolate the torch. In some embodiments, the lock ring 316 is replaced by heat shrinking or gluing. In some embodiments, the lock ring 316 is shaped to orient the cartridge 300 (e.g., axially), to optimize gas flow, to enable electrical connection to the cathode, and/or to provide electrical isolation.

In various embodiments described herein, the cartridges or consumable assemblies are about 8.9 cm (3.5 inches) in length and 2.79 cm (1.1 inches) in diameter. In some embodiments, the retaining cap is considered part of the torch, e.g., not a consumable component. In such configurations, machining steps can be minimized, with no machining necessary after assembly (as compared to some torch assemblies that require a final machining step to achieve functional axiality of the cartridge). In some embodiments, the reduction in swirl holes can minimize drilling operations compared to prior art swirl rings. In some embodiments, replacing Vespel^{™} with aluminum can significantly reduce manufacturing costs of the cartridge. In some embodiments, copper is used only in certain locations in the electrode, nozzle, and/or orifice, which can reduce manufacturing costs. For example, copper can be concentrated primarily in an inner core or region to achieve the heat and current conduction benefits described above while minimizing the regions using the more expensive copper material.

In some embodiments, the anodized layer formed on select cartridge components can be created using a hard anodizing technique. An anodized layer formed using a Sulfuric hard anodizing process can be formed using an electrolytic solution of sulfuric acid. For example, an electrolytic solution of sulfuric acid at approximately 0° C (32 degreees Fahrenheit) and a current density of about 23 to 37 Amperes per 30.5 cm² (square foot) can be used. The process can be run for about 20 to 120 minutes, depending on the alloy used and the desired coating thickness. A coating having a thickness of about 10 to 50 microns can be produced. This hard anodized coating can provide high corrosion resistance (e.g., 336+ hours salt spray resistance), high durability (e.g. 60-70 Rockwell C-scale rating), and electrical insulation (e.g. 800 V/mil thickness). The hard anodize coating can be dyed, which does not necessarily produce the vibrant colors that a sulfuric anodize produces.

The anodizing process can provide a surface conversion of Aluminum to Al₂O₃. The anodizing process can provide a hard dielectric shell of about 0.08 mm (0.003 inches) thick (including both 50% build up (e.g. deposits on the part) and 50% penetration (e.g. material change to the exposed surfaces of the component). The hard dielectric shell can provide good atmospheric corrosion resistance. For extreme environments a 5% dichromate solution sealing is recommended, which can produce fair abrasion resistance. In some embodiments, a plurality of anodized disks can be pressed or heat shrunk together. Using a plurality of disks can create adjustable electrical isolation, e.g. because each disk increases electrical isolation linearly (via each coating/layer introduced by the new surfaces of each disk). By using multiple layers, electrical isolation capability can be made very strong. In some embodiments, plastics, ceramics, lava, or Vespel can be used in place of any or all of the anodized portions/components discussed herein.

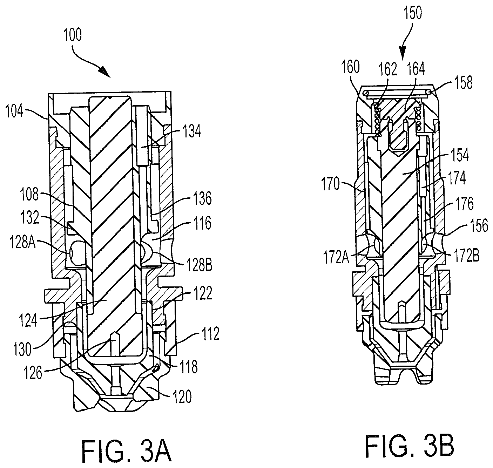

Figure 3A is a cross-sectional illustration of an inner cartridge assembly 100 for a plasma arc torch having plastic insulating components, according to an illustrative embodiment of the invention. The inner cartridge assembly 100 includes many components similar to those in the cartridge assembly 300 shown above in Figure 2B. However, certain portions formed from anodized aluminum above can be replaced in this configuration with plastic portions. In particular, the cartridge assembly 100 includes a rear plastic portion 104 (e.g., a high temperature thermoplastic cap to function as or replace the rear insulator or locking ring 316 shown above in Figures 2A-2B), a sleeve plastic component 108 (e.g., to replace the insulator sleeve 332 shown above in Figure 2B), and a front plastic component 112 (e.g., to replace the insulator 314 shown above in Figure 2B). In some embodiments, the plastics-based cartridge does not transfer heat as well as the anodized aluminum based cartridge and is more prone to material breakdowns. However, the plastic based approach does not rely on shells of oxide for electrical insulation, which may be susceptible to chipping, scratching, and/or cracking (leading to break down and/or failure, for example by creating a current path through the component that hinders operation or damages the system).

The plastic based cartridge 100 can include an aluminum nozzle body 116, to which other parts attach directly or indirectly-e.g., a nozzle orifice 118, a shield 120, and an electrode 124 having an emitting element 126. The nozzle orifice 118 can be pressed into the nozzle body 116, for example at press fit junction 122. As above, the nozzle body 116 can have inlet swirl holes 128 (e.g., 128A and 128B as shown) and/or holes 130 directed forward (e.g., toward the front of the cartridge) through which shield gas can pass. The shield 120 can be made of copper and/or snapped onto a high temperature thermoplastic insulator. The shield/insulator assembly can be fastened to (e.g., snapped onto) the nozzle body 116. The electrode 124 can be made of copper. The electrode 124 can include an aluminum sleeve 132 having cooling holes (e.g. upper cooling gas flow channel 134 and lower cooling gas flow channel 136) pressed onto it. The high temperature thermoplastic sleeve 108 can be connected to (e.g., snapped onto) the electrode aluminum sleeve 132. The electrode 124 can be moveable within the nozzle body 116. The high temperature thermoplastic cap 104 can be snapped into the nozzle body to "trap" the electrode. The useful life of the cartridge parts can be arranged such that the useful lives of the individual parts are similar to one another. At the end of the cartridge's life, the entire cartridge 100 can be discarded (e.g., recycled), with no parts reused.

In some embodiments, the front plastic component 112 connects to and electrically isolates the shield 120 from the nozzle body 116. In some embodiments, the nozzle body 116 includes five shield cooling holes to supply cooling gas to the shield. In some embodiments, the sleeve plastic component 108 can be stressed during operation while both the front plastic component 112 and the rear plastic component 104 face milder conditions. These conditional variations can make it desirable to use different plastics for the front, middle and/or rear plastic portions. In some embodiments, the sleeve plastic portion 108 can be exposed to large thermal extremes, while the front plastic component 112 and the rear plastic component 104 can face comparatively lower temperatures during operation. As a result, the sleeve plastic component 108 can be formed of a more robust material/plastic (which involves increased cost and difficulty to manage) while the front and/or rear components 104, 112 can be formed of a separate slightly less robust material/plastic (which involves decreased cost and difficulty to manage). In some embodiments, the torch is hottest toward the front. In some embodiments, plastics that can withstand high temperatures can be used toward the front, but these materials are often more expensive. Less expensive materials can be used in cooler areas of the torch.

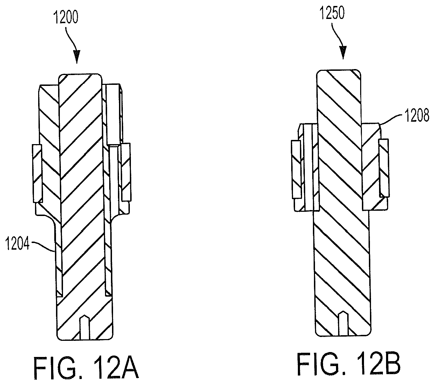

It is also possible to use anodized aluminum, ceramics, lava, or Vespel in place of any or all of these plastic portions/components. In some embodiments, cooling holes 134, 136 in the aluminum electrode sleeve 132 allow cooling gas to flow between the electrode 124 and nozzle body 116. The cooling holes 134, 136 can have different diameters within the sleeve 132 to achieve desired flow characteristics (e.g., increased flow, increased pressure, turbulent flow, laminar flow, etc.) for a given cartridge. In some embodiments, the electrode sleeve 132 can be shorter or longer (as shown in Figures 12A-12B below), providing for increased contact area (direct conduction) and gas exposure surface (lengthened flow holes and surface area through sleeve) for improved thermal conductivity. In some embodiments, a material can be provided between the electrode sleeve 132 and the nozzle body 116 (e.g., plastic or anodized aluminum) to insulate the components from one another.

Figure 3B is a cross-sectional illustration of a cartridge type consumable assembly 150 including a spring electrode 154 disposed within a nozzle body 156 and a sealing device 158 (e.g., an o-ring) disposed within a lock ring 160, according to an illustrative embodiment of the invention. The sealing device 158 can be configured to connect to a plasma arc torch. The spring electrode 154 can include a resilient member 162 (e.g., a spring) and a thumbtack or contact element 164 that extends within the electrode 154 and is connected to the resilient member 162 disposed between the contact element 164 and the electrode 154. In some embodiments, the electrode sleeve 170 can have shaped (e.g., scooped) front ends 172A, 172B to direct gas flow within the consumable assembly 150. As above, the flow holes 174, 176 through the electrode sleeve 170 can have more than one diameter. The spring electrode 154 can function in a manner consistent with known spring electrodes.

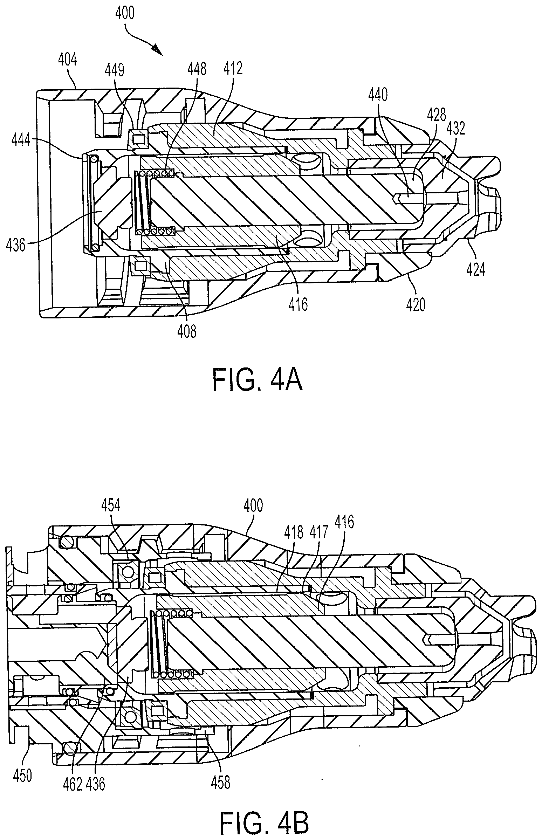

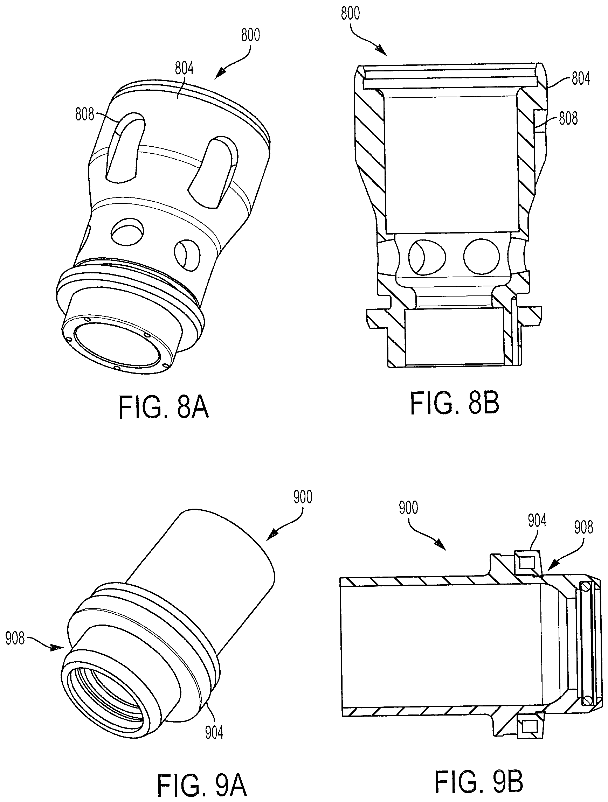

Figure 4A is a cross-sectional view of a cartridge 400 for a plasma arc cutting system, according to an illustrative embodiment of the invention. The cartridge 400 can include substantially similar components to those discussed above. Notably, in this embodiment, the cartridge 400 can have a total of twelve parts: two molded plastic (e.g., PEEK) parts (e.g., a retaining cap 404 and a nozzle base liner 408 (or "locking ring," or "isolation ring," e.g. as shown and described below in Figure 9A); two machined aluminum parts (e.g., a nozzle base 412 and an electrode sleeve 416); one anodized aluminum part (e.g., a shield isolater or insulator 420, press fit to the aluminum nozzle base 412 and a shield 424); three copper parts (e.g., the shield 424, an electrode 428, and a nozzle 432); one plated brass part (e.g., an electrode contact button 436); one halfnium insert 440 in a bore of the electrode 428; one o-ring 444; and one spring 448. In some embodiments, the cartridge 400 includes an information storage device 449 (e.g., a RFID tag) for communicating information with a reader of the plasma arc torch (e.g., the reader 454 shown below in Figure 4B). The RFID technology can function as described, for example, in U.S. Serial No. 14/079,163, filed November 13, 2013 and entitled "Automated Cartridge Detection for a Plasma Arc Cutting System".

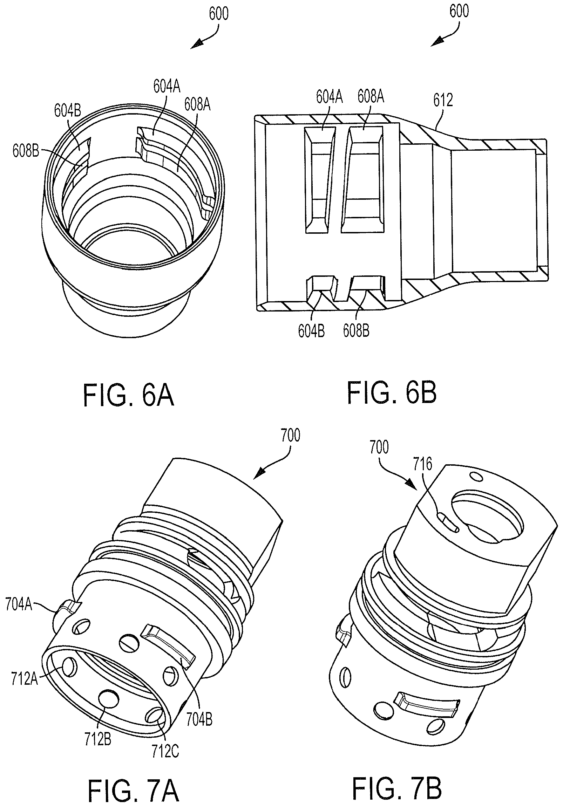

Figure 4B is a cross-sectional view of the cartridge 400 installed in a torch head 450, according to an illustrative embodiment of the invention. The torch head 450 can include an electrical contact 458, for example a Louvertac (shown and described in more detail in Figures 7A and 7B below). In this view, an outer diameter 418 of the electrode sleeve 416 is visible, which allows gas to flow through a gap 417. In some embodiments, the gap 417 is 0.08 mm (0.003 inches). When installed in the torch, the electrode contact button 458 makes contact with torch contact 462 and permits a current to flow to the cartridge 400 for ignition.

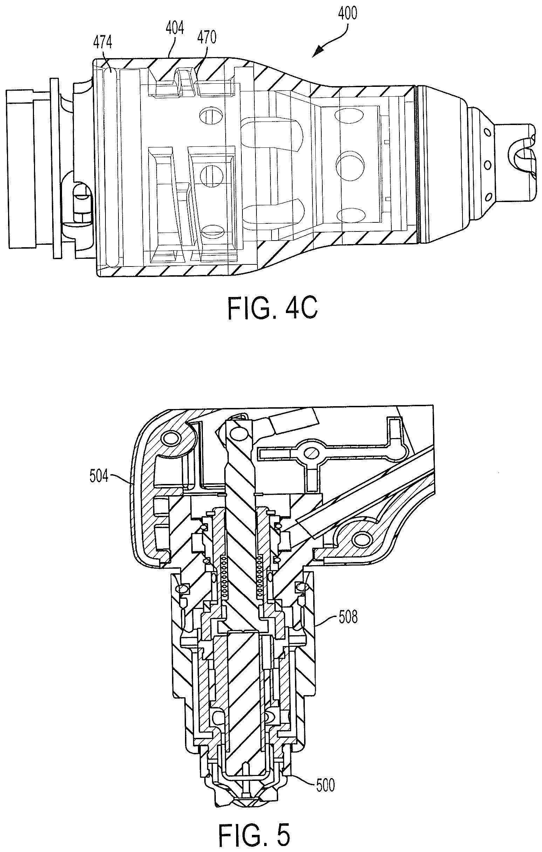

Figure 4C is an exterior view of the cartridge 400 installed in the torch head 450 shown in Figure 4B, the cartridge exterior rendered partially transparent to show a quick-turn thread feature 470 formed on torch head 450 and an inner surface of retaining cap 404, according to an illustrative embodiment of the invention. The quick-turn thread feature 470 can be molded or shaped to mate with the retaining cap 404. The quick-turn feature can include a non-standard stub acme thread. When installing the cartridge 400 in the torch head 450, an operator can simply push the cartridge 400 until it encounters o-ring 474. Then, the operator can turn the cartridge 400 (e.g., one-third of one rotation) to lock the cartridge 400 into place. The quick-turn configuration carries the advantage of having no extra or moving parts, and can be simple to use and inexpensive to manufacture.

Figure 5 is a cross-sectional view of a cartridge 500 installed in a torch head 504, according to an illustrative embodiment of the invention (e.g., as in Figures 2A-3B, which show a torch connected via a separable retaining cap). In this configuration, the retaining cap 508 for connecting cartridges can be significantly simplified as compared to previous designs. For example, there is no need to use Vespel (as has been used in the past), which significantly reduces material costs. The retaining cap 508 can be made of aluminum (or, for a higher cost, brass or copper) with a simple plastic and/or composite shell covering. In some embodiments, a sleeve can be added to help retain the cartridge 500. In some embodiments, the retaining cap 508 can be part of the torch, e.g. not considered to be a consumable part. In some embodiments, the shapes and sizes of the pieces of the Figure 5 assembly can be modified, provided that the required electrical isolations and/or required gas flows and current paths are maintained. In some embodiments, both plastics based and anodized based insulators may be used in this embodiment.

The cartridge designs shown and described above in Figures 1-5 can enable a fast cartridge change time (e.g., less than seven seconds). For example, an exemplary installation process can proceed in as little as two steps: (1) a cartridge can be dropped in the retaining cap; (2) the retaining cap can then be attached to the torch. Alternatively, if a cartridge has an integrated retaining cap, the cartridge can simply be twisted onto the torch. The system can then be ready for operation. In contrast, prior art systems have required that a consumable stack-up be assembled piece by piece by an operator. For example, the prior art assembly can include steps of: dropping a nozzle in a retaining cap; placing an electrode in a swirl ring; sliding the swirl ring and electrode into the retaining cap and nozzle; screwing a shield onto the retaining cap; and attaching the retaining cap to the torch to perform the cut, all while making sure that all components match for the desired process. Thus, the current invention significantly increases ease and economy of installing consumable components.

In some embodiments, cartridges are replaced as units, with no need to further assemble appropriate consumable stackups or select appropriate consumable combinations. In some embodiments, the length of the emitting element can be adjusted to match the life of the nozzle such that the cartridge parts reach the end of their useful lives at approximately the same time. In some embodiments, cut quality can be similar to that achieved using current consumables. In some embodiments, a spring need not be used with the electrode. Elimination of the spring may reduce manufacturing costs by eliminating the spring and thumbtack components on the top of the spring electrode. In some embodiments, machining steps can be minimized, with no machining necessary after assembly (as compared to some torch assemblies that require a final machining step to achieve functional axiality of the cartridge). In some embodiments, the reduction in swirl holes can minimize drilling operations compared to prior art swirl rings (the cross sectional area of these larger holes is roughly equivalent to the cross sectional area of all previous smaller holes). In some embodiments, particular components are or may optionally be molded or moldable, e.g., do not require machining. Thus, threading on the retaining cap and/or other components is not necessary to attach the components (e.g., cartridge consumable assembly), as the components can be already press fit together.

Figures 6-12 below show more detailed views of certain individual cartridge parts shown and described above separately from surrounding parts. These parts can be used with the embodiments described above, for example as shown and described in Figures 3A-3B, 4A-4C and/or 5.

Figure 6A is a top-perspective view of a retaining cap 600 for a plasma arc torch, according to an illustrative embodiment of the invention, and Figure 6B is a cross section view of the retaining cap 600. The retaining cap 600 includes threads 604 (e.g., 604A and 604B) and 608 (e.g., 608A, 608B). In some embodiments, the threads 604, 608 enable the retaining cap 600 to perform the quick-lock function when installed in the torch. In some embodiments, the retaining cap 600 is formed of molded PEEK. In some embodiments, the retaining cap includes a "non-standard 4 pitch stub acme." In Figure 6B, the cartridge exterior 612 is depicted transparently so that the structure of the internal contours 604A-B, 608A-B is visible as viewed from the side.

Figures 7A and 7B are top-perspective and bottom-perspective views, respectively of a torch body 700, according to an illustrative embodiment of the invention (e.g., as shown in one or more embodiments described above). The torch body 700 includes quick-turn threads 704 (e.g., 704A, 704B) for mating to corresponding threads in the retaining cap 600 shown above. The torch body 700 also includes a groove 708 for a Louvertac and holes 712 (e.g., 712A, 712B, 712C) for incoming gas flow. The torch body 700 also includes a slot 716 for a RFID reader connector.

Figures 8A and 8B are perspective and cross-sectional views of a nozzle base 800, respectively, according to an illustrative embodiment of the invention. The nozzle base 800 includes an electrical contact surface 804 for mating with the torch body Louvertac. The nozzle base 800 also includes a gas flow slot 808 having an anti-rotation sharp edge lock 808. In some embodiments, the nozzle base 800 also includes an alignment feature for ensuring proper alignment within the torch head.

Figures 9A and 9B are perspective and side-exterior views, respectively, of a locking ring (or "locking ring," "isolation ring" or "nozzle base liner") 900 (e.g., nozzle base liner 408 as shown above in Figure 4A), according to an illustrative embodiment of the invention. The locking ring 900 can be formed of molded PEEK and can include a RFID tag 904 snapped onto the locking ring 900. The locking ring 900 can be the interface between the torch and the cartridge. The locking ring 900 can be pressed into the nozzle body to trap the moveable electrode. The locking ring 900 can contain the cartridge components within the cartridge and electrically isolate the torch from the cartridge. In some embodiments, the locking ring 900 can be replaced by heat shrinking or gluing. In some embodiments, the locking ring 900 is shaped to orient the cartridge (e.g. axially), to optimize gas flow, to enable electrical connection to the cathode and/or to provide electrical isolation. In some embodiments, the locking ring 900 includes a circumferential flange or step feature 908 shaped to connect to a complementary flange on the nozzle body by forming a snap fit arrangement to prevent disassembly or separation of the two components following installation.

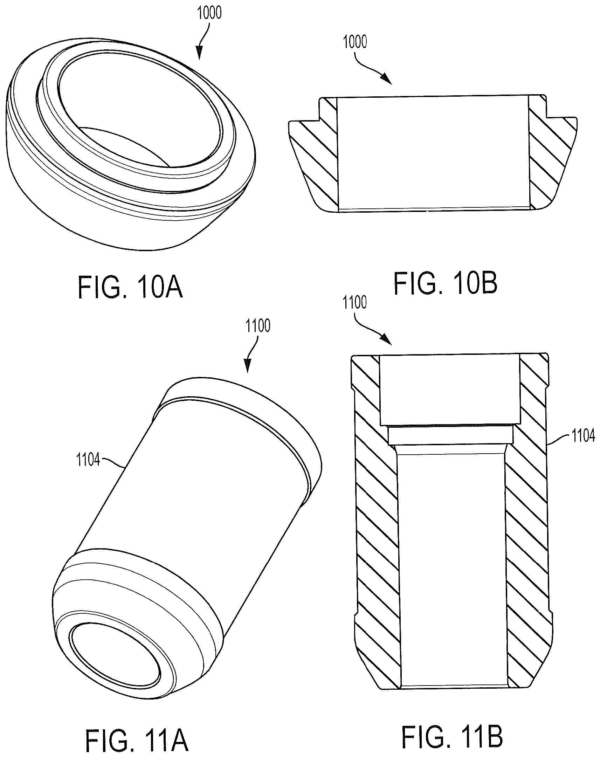

Figures 10A and 10B are perspective and cross-sectional views, respectively, of a shield isolator 1000, according to an illustrative embodiment of the invention. The shield isolator 1000 can be made of anodized aluminum or other suitable dielectric material. Figures 11A and 11B are perspective and cross-sectional views, respectively, of an electrode sleeve 1100, according to an illustrative embodiment of the invention. An outer surface 1104 of the electrode sleeve 1100 can facilitate gas flow and heat transfer within and throughout the torch. In some embodiments, the electrode sleeve comprises aluminum, anodized aluminum, and/or thermoplastics..

Figures 12A and 12B are cross-sectional views of shortened and elongated electrode sleeve assemblies, 1200 and 1250 respectively, according to an illustrative embodiment of the invention. The elongated electrode sleeve assembly 1200 includes an elongated portion 1204, while the shortened assembly 1250 includes a shortened portion 1208.

While the invention has been particularly shown and described with reference to specific preferred embodiments, it should be understood by those skilled in the art that various changes in form and detail may be made therein without departing from the scope of the invention as defined by the following claims. In particular, the dimensions shown and discussed herein are offered by way of example only and are not intended to be construed as limiting.

## Claims

1. A frame for a plasma arc torch cartridge (100, 200, 240, 300, 400), the frame comprising:
a thermally conductive cartridge frame body (116, 156, 216, 308) having a longitudinal axis, a first end configured to connect to a first consumable component, and a second end configured to mate with a second consumable component, the cartridge frame body (116, 156, 216, 308) surrounding at least a portion of the second consumable component; and
a set of flow passages (128, 174, 228, 312, 328) formed within the cartridge frame body (116, 156, 216, 308), the set of flow passages (128, 174, 228, 312, 328) fluidly connecting an internal surface of the cartridge frame body and an external surface of the cartridge frame body, the set of flow passages (128, 174, 228, 312, 328) configured to impart a fluid flow pattern about the second consumable component,
**characterised in that** the frame body is metallic.

2. The frame of claim 1 wherein the first consumable component is a nozzle (116, 216, 308) and the second consumable component is an electrode (124, 220, 320, 428).

3. The frame of claim 1 wherein at least one of the first or the second end includes a threaded region shaped to engage a complementary component.

4. The frame of claim 1 wherein the set of flow passages (128, 174, 228, 312, 328) includes a plurality of holes that are radially offset from one another.

5. The frame of claim 4 wherein the radial offset is 0.127 cm (0.05 inches) to 1.27 cm (0.5 inches).

6. The frame of claim 1 wherein the external surface of the frame body is configured to connect to a retaining cap (404, 508, 600).

7. The frame of claim 1 wherein the flow passages (128, 174, 228, 312, 328) each have a diameter of about 0.3556 cm (0.14 inches).

8. The frame of claim 1 wherein the frame further comprises a shield insulator (314, 1000) connected to the frame body.

9. The frame of claim 2 wherein the first end is configured to connect to a shield (212, 304) via a shield insulator (208, 314).

10. The frame of claim 9 wherein the frame facilitates thermal communication between the shield (212, 304) and the nozzle (216, 308).

11. The frame of claim 2 further including a cap insert connected to the second end of the cartridge frame, the cap insert orienting the electrode (124, 220, 320, 428) and retaining it within the cartridge frame.

12. The frame of claim 11 wherein the frame further comprises a seal disposed within the locking ring.

## Patentansprüche

1. Rahmen für eine Plasmabrennerkartusche (100, 200, 240, 300, 400), wobei der Rahmen Folgendes umfasst:
einen wärmeleitenden Kartuschenrahmenkörper (116, 156, 216, 308) mit einer Längsachse, einem ersten Ende, das dazu ausgelegt ist, mit einer ersten Einwegkomponente verbunden zu werden, und einem zweiten Ende, das dazu ausgelegt ist, mit einer zweiten Einwegkomponente zusammenzupassen, wobei der Kartuschenrahmenkörper (116, 156, 216, 308) mindestens einen Abschnitt der zweiten Einwegkomponente umgibt; und
einen Satz von Flussdurchgängen (128, 174, 228, 312, 328), die innerhalb des Kartuschenrahmenkörpers (116, 156, 216, 308) ausgebildet sind, wobei der Satz von Flussdurchgängen (128, 174, 228, 312, 328) eine Innenfläche des Kartuschenrahmenkörpers und eine Außenfläche des Kartuschenrahmenkörpers fluidisch verbindet, wobei der Satz von Flussdurchgängen (128, 174, 228, 312, 328) dazu ausgelegt ist, ein Fluidflussmuster um die zweite Einwegkomponente herum zu vermitteln, **dadurch gekennzeichnet, dass** der Rahmenkörper metallisch ist.

2. Rahmen gemäß Anspruch 1, wobei die erste Einwegkomponente eine Düse (116, 216, 308) und die zweite Einwegkomponente eine Elektrode (124, 220, 320, 428) ist.

3. Rahmen gemäß Anspruch 1, wobei mindestens eines des ersten oder des zweiten Endes einen Gewindebereich enthält, der so gestaltet ist, dass er in Eingriff mit einer komplementären Komponente gelangt.

4. Rahmen gemäß Anspruch 1, wobei der Satz von Flussdurchgängen (128, 174, 228, 312, 328) eine Vielzahl von Löchern enthält, die radial zueinander versetzt sind.

5. Rahmen gemäß Anspruch 4, wobei der radiale Versatz 0,127 cm (0,05 Zoll) bis 1,27 cm (0,5 Zoll) beträgt.

6. Rahmen gemäß Anspruch 1, wobei die Außenfläche des Rahmenkörpers dazu ausgelegt ist, mit einer Festhaltekappe (404, 508, 600) verbunden zu werden.

7. Rahmen gemäß Anspruch 1, wobei die Flussdurchgänge (128, 174, 228, 312, 328) jeweils einen Durchmesser von ca. 0,3556 cm (0,14 Zoll) aufweisen.

8. Rahmen gemäß Anspruch 1, wobei der Rahmen ferner einen mit dem Rahmenkörper verbundenen Schirmisolator (314, 1000) umfasst.

9. Rahmen gemäß Anspruch 2, wobei das erste Ende dazu ausgelegt ist, über einen Schirmisolator (208, 314) mit einem Schirm (212, 304) verbunden zu werden.

10. Rahmen gemäß Anspruch 9, wobei der Rahmen eine Wärmeübertragung zwischen dem Schild (212, 304) und der Düse (216, 308) ermöglicht.

11. Rahmen gemäß Anspruch 2, ferner enthaltend einen Kappeneinsatz, der mit dem zweiten Ende des Kartuschenrahmens verbunden ist, wobei der Kappeneinsatz die Elektrode (124, 220, 320, 428) ausrichtet und innerhalb des Kartuschenrahmens festhält.

12. Rahmen gemäß Anspruch 11, wobei der Rahmen ferner eine im Verriegelungsring angeordnete Dichtung umfasst.

## Revendications

1. Armature pour cartouche (100, 200, 240, 300, 400) de torche à arc de plasma, l'armature comportant :
un corps (116, 156, 216, 308) d'armature de cartouche thermiquement conducteur présentant un axe longitudinal, une première extrémité configurée pour se raccorder à un premier composant consommable, et une seconde extrémité configurée pour s'accoupler avec un second composant consommable, le corps (116, 156, 216, 308) d'armature de cartouche entourant au moins une partie du second composant consommable ; et
un ensemble de passages (128, 174, 228, 312, 328) d'écoulement formés à l'intérieur du corps (116, 156, 216, 308) d'armature de cartouche, l'ensemble de passages (128, 174, 228, 312, 328) d'écoulement reliant fluidiquement une surface interne du corps d'armature de cartouche et une surface externe du corps d'armature de cartouche, l'ensemble de passages (128, 174, 228, 312, 328) d'écoulement étant configuré pour engendrer un schéma d'écoulement de fluide autour du second composant consommable, **caractérisé en ce que** le corps d'armature est métallique.

2. Armature selon la revendication 1, le premier composant consommable étant une buse (116, 216, 308) et le second composant consommable étant une électrode (124, 220, 320, 428).

3. Armature selon la revendication 1, au moins une des première et seconde extrémités comprenant une région filetée dotée d'une forme de nature à interagir avec un composant complémentaire.

4. Armature selon la revendication 1, l'ensemble de passages (128, 174, 228, 312, 328) d'écoulement comprenant une pluralité de trous qui sont décalés radialement les uns par rapport aux autres.

5. Armature selon la revendication 4, le décalage radial étant de 0,127 cm (0,05 pouce) à 1,27 cm (0,5 pouce) .

6. Armature selon la revendication 1, la surface externe du corps d'armature étant configurée pour se raccorder à un capuchon (404, 508, 600) de maintien.

7. Armature selon la revendication 1, chacun des passages (128, 174, 228, 312, 328) d'écoulement présentant un diamètre d'environ 0,3556 cm (0,14 pouce).

8. Armature selon la revendication 1, l'armature comportant en outre un isolateur (314, 1000) d'écran lié au corps d'armature.

9. Armature selon la revendication 2, la première extrémité étant configurée pour se raccorder à un écran (212, 304) par l'intermédiaire d'un isolateur (208, 314) d'écran.

10. Armature selon la revendication 9, l'armature facilitant une communication thermique entre l'écran (212, 304) et la buse (216, 308).

11. Armature selon la revendication 2, comprenant en outre un insert de capuchon lié à la seconde extrémité de l'armature de cartouche, l'insert de capuchon orientant l'électrode (124, 220, 320, 428) et la maintenant à l'intérieur de l'armature de cartouche.

12. Armature selon la revendication 11, l'armature comportant en outre un joint disposé à l'intérieur de la bague de verrouillage
